# EUROPEAN PATENT SPECIFICATION

(11) **EP 3 857 453 B1**
(45) Date of publication and mention of the grant of the patent: **28.10.2026**
(21) Application number: 19704006.6
(22) Date of filing: 08.02.2019
(51) Int. Cl.: G06N 3/0495, G06N 3/063, G06N 3/045, G06N 3/0464, G06N 3/048

(54) **NEURAL NETWORK QUANTIZATION METHOD USING MULTIPLE REFINED QUANTIZED KERNELS FOR CONSTRAINED HARDWARE DEPLOYMENT**
QUANTISIERUNGSVERFAHREN FÜR NEURONALE NETZWERKE UNTER VERWENDUNG MEHRERER VERFEINERTER QUANTISIERTER KERNEL FÜR EINGESCHRÄNKTEN HARDWARE-EINSATZ
PROCÉDÉ DE QUANTIFICATION DE RÉSEAU NEURONAL FAISANT INTERVENIR DE MULTIPLES NOYAUX QUANTIFIÉS AFFINÉS POUR UN DÉPLOIEMENT DE MATÉRIEL CONTRAINT

(43) Date of publication of application: 04.08.2021
(73) Proprietor: Huawei Technologies Co., Ltd., Shenzhen Guangdong 518129 (CN)
(72) Inventor: CHOUKROUN, Yoni, 80992 Munich (DE)
(74) Representative: Pfenning, Meinig & Partner mbB
(86) International application number: PCT/EP2019/053161
(87) International publication number: WO 2020/160787

(56) References cited:
- EP-A1- 3 438 890
- US-A1- 2017 286 830
- US-A1- 2019 042 935

## Description

### BACKGROUND

The present invention, in some embodiments thereof, relates to neural network quantization, but not exclusively, to a system for neural network quantization for constrained hardware.

Transforming pre-trained neural networks to computationally efficient and low power models is an important task in optimization of firmware resources, which has recently become ubiquitous, and requires transforming, with minimal loss of accuracy and data, an initial full precision model into a lower precision model that can be efficiently handled with dedicated firmware. An example where optimization of firmware resources are needed is a face detection/recognition scenario, where large amounts of data needs to be analyzed in real time with minimal power cost and on small devices (such as surveillance cameras).

Quantization is a method for transforming a neural network into a lower precision model, by reducing the precision of neural network parameters. For example, quantization may apply to neural network weights, activation functions, and/or neural network gradients. Quantization methods transforming a neural network parameters and activations from a 32-bit floating point (FP32) model to an 8-bit (INT8) model are well known to speed computations and reduce hardware energy consumption.

US2019042935A1 describes an apparatus for applying dynamic quantization of a neural network. The apparatus includes a scaling unit to calculate an initial desired scale factor of a plurality of inputs, weights and a bias and apply the input scale factor to a summation node. The scaling unit is also used to determine a scale factor for a multiplication node based on the desired scale factors of the inputs and select a scale factor for an activation function and an output node. The quantizing unit is to dynamically re-quantize the neural network by traversing a graph of the neural network.

### SUMMARY

It is an object of the present invention to provide a system and a method for neural network quantization.

The foregoing and other objects are achieved by the features of the independent claims. Further implementation forms are apparent from the dependent claims, the description and the figures.

According to a first aspect of the invention, a method of outputting, to at least one client factory installing pattern recognition firmware, a configuration of a neural network, trained from a plurality of data samples, for implementation on constrained hardware, wherein the implementation on the constrained hardware is an installation on the security cameras for a purpose of the pattern recognition, the method comprising: Receiving neural network parameters from the client factory installing pattern recognition firmware, wherein the neural network parameters consist of tensors of neural network weights, and neural network activation functions parameters; and receiving, from the client factory installing pattern recognition firmware, an input which indicates a request for the configuration of the neural network for the implementation on the constrained hardware. The configuration is performed on a plurality of weights of the tensors of the neural network weights, by: quantizing each layer of the neural network to produce a quantized neural network with a plurality of respective scaling factors; locating one or more layers of the quantized neural network; computing a modified quantization for the one or more located layers to produce a modified quantized neural
network; computing a modified quantization for the one or more located layers to produce a modified quantized neural network; and adjusting the plurality of scaling factors of the modified quantized neural network by computing a similarity between a plurality of neural network outputs and a plurality of modified quantized neural network outputs. Locating one or more layers of the quantized neural network comprises: locating (204) one or more layers of the quantized neural network which display a high reconstruction error following the quantization. Computing a modified quantization for the one or more located layers to produce a modified quantized neural network comprises: assigning a dual 4 bit, INT4, representation, wherein the constrained hardware is capable of only INT4 representations. The method further comprises: outputting, to the client factory installing pattern recognition firmware, outcomes of the configuration of the neural network. Employing a three step configuration for which neural network layers which exhibit high error are reconfigured, and scaling factors readjusted, enables accurate quantization within the constrained hardware capable of only INT4 quantization.

According to a second aspect of the invention, a system for outputting, to at least one client factory installing pattern recognition firmware, a configuration of a neural network, trained from a plurality of data samples, for implementation on constrained hardware, wherein the implementation on the constrained hardware is an installation on security cameras for a purpose of pattern recognition, the configuration is performed on a plurality of weights of the of the tensors neural network weights. The system comprises: an I/O interface configured to: receive neural network parameters from the client factory installing pattern recognition firmware, wherein the neural network parameters consist of tensors of neural network weights, and neural network activation functions parameters; receive, from the client factory installing pattern recognition firmware, an input which indicates a request for the configuration of the neural network for the implementation on the constrained hardware; and processing circuitry, configured to: quantizing each layer of the neural network to produce a quantized neural network with a plurality of respective scaling factors; locating one or more layers of the quantized neural network; computing a modified quantization for the one or more located layers to produce a modified quantized neural network; and adjusting the plurality of scaling factors of the modified quantized neural network by computing a similarity between a plurality of neural network outputs and a plurality of modified quantized neural network outputs. The processing circuitry is configured to locate one or more layers of the quantized neural network by: locating one or more layers of the quantized neural network which display a high reconstruction error following the quantization.

The processing circuitry is configured to compute a modified quantization for the one or more located layers to produce a modified quantized neural network by: assigning a dual 4 bit, INT4, representation. The constrained hardware is capable of only INT4 representations. The I/O interface is further configured to: output, to the client factory installing pattern recognition firmware, outcomes of the configuration of the neural network. The system may be part of a system, such as a factory manufacturing system, in which neural networks are configured for installment as firmware within constrained hardware.

According to a third aspect of the invention, a non-transitory computer-readable storage medium comprises a program code which, when executed by a computer, causes the computer to
implement the method of the first aspect.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is an exemplary layout of the various components of a neural network quantization system, according to some embodiments of the present invention;
FIG. 2 is an exemplary dataflow of a process for configuring a neural network, according to some embodiments of the present invention;
FIG. 3 is an exemplary dataflow of a process of kernel wise quantization of a neural network, according to some embodiments of the present invention;
FIG. 4 is an exemplary dataflow of an iterative process of modifying quantization of neural network layers with a high reconstruction error, according to some embodiments of the present invention; and
FIG. 5 is an exemplary dataflow of an iterative process of adjusting scaling factors of a neural network, according to some embodiments of the present invention.
FIG. 6 is an exemplary dataflow of a process of configuring a neural network by neural network activations, according to some embodiments of the present invention;
FIG. 7 is a depiction of results of simulations of NN weight configuration, by using the first two configuration stages, according to some embodiments of the present invention.
FIG. 8 is a depiction of results of simulations of NN weight configuration, by using all three configuration stages, according to some embodiments of the present invention.

### DETAILED DESCRIPTION

The present invention, in some embodiments thereof, relates to neural network quantization, but not exclusively, to a system for neural network quantization for constrained hardware deployment.

According to some embodiments of the present invention, there are provided systems and methods which quantize neural networks for a purpose of improving computational efficiency and reducing resource consumption. For example, a neural network quantization system may transform FP32 representations of neural network weights and/or activations to INT4 representations, while preserving some accuracy of the neural network functionality (functionality such as classification and/or identification of data).

Quantization of neural network parameters, such as weights and activations, may reduce memory loading, computation latency, and power consumption. herein 'activations' means both inputs and outputs of neural network layers, also known as 'feature maps'. Quantization of neural networks is especially relevant when processing datasets in real-time using limited hardware, for example in scenarios where deep neural networks are used for image recognition, such as in security cameras placed at sensitive locations.

### CURRENT STATE OF THE ART FOR NEURAL NETWORK QUANTIZATION.

Current solutions to neural network (NN) quantization focus on approximation of NN parameters such as weights and/or NN activations by reducing their precision, either by approximating pre-trained NN parameters and activations, or training NN's directly with low precision parameters.

Commonly used NN quantization solutions by approximation of pre-trained NN parameters, include those provided by Google and NVIDIA, which are described respectively in the following references: "Quantization and Training of Neural Networks for Efficient Integer-Arithmetic-Only Inference" by B. Jacob, S. Kligys, B. Chen, M. Zhu, M. Tang, A. Howard, H. Adam, and D. Kalenichenko. Published at arXiv: 1712.05877 on December 15, 2017, and "8-bit Inference with TensorRT" by S. Migacz, presented at GPU technology conference on May 8, 2017.

The solution provided by Google is not feasible if prior statistics on NN activations are not given, and is more applicable for quantization during training of NN models. The
solution provided by NVIDIA requires statistics of NN activations for more efficient quantization of feature maps.

The main disadvantage of both frameworks is inaccuracy for lower precision approximations in quantizing to INT4 precision.

### THE NN CONFIGURATION SOLUTION PROVIDED HEREIN.

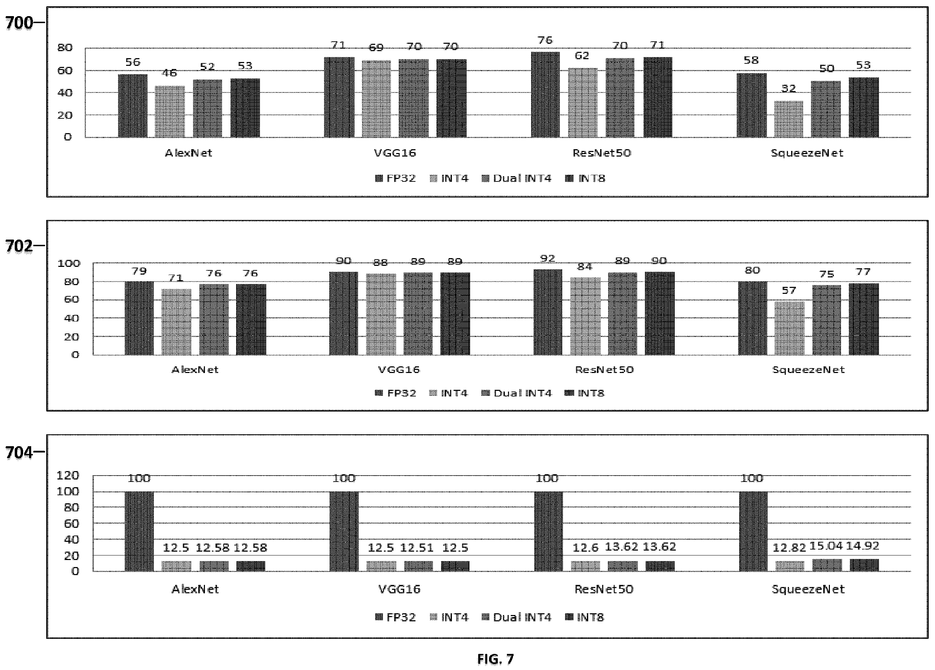

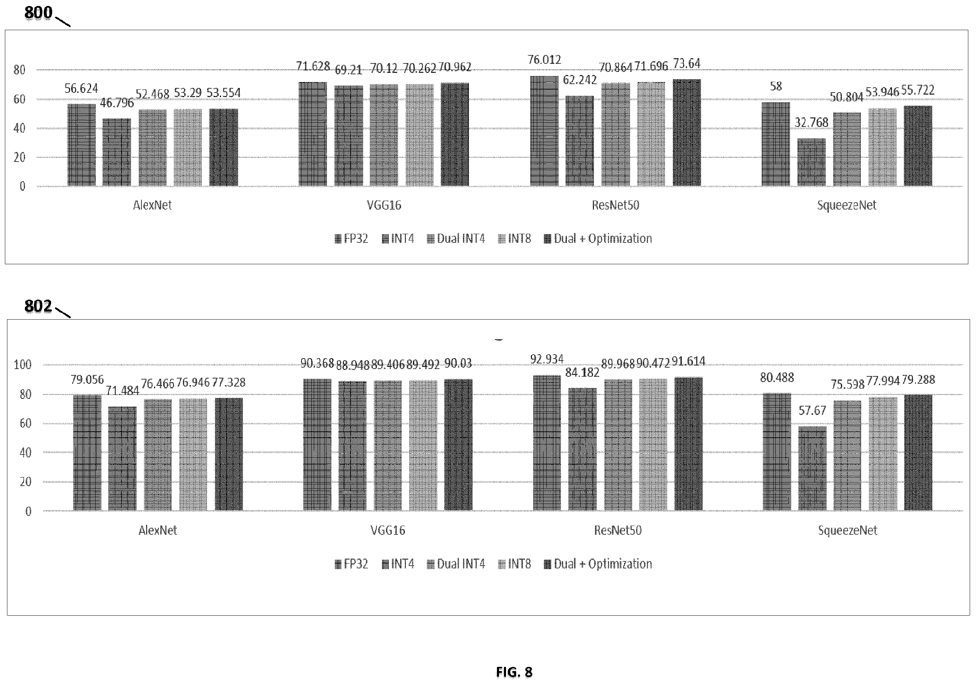

The method described herein provides a NN configuration solution, applicable to both NN weights and activations, which reduce both memory footprint and hardware power consumption. The system may provide a relatively high accuracy for INT4 NN quantization as demonstrated in experimental results (FIG. 7, FIG. 8), which may improve implementation functionality within constrained hardware.

The method is particular useful in structured NN's, such as convolutional NN's (CNN's), for which connectivity between neurons are organized in layers, wherein in each layer groups of neurons, commonly referred to as kernels, share a common connectivity to a previous layer. Each layer of a CNN is represented by a weight tensor, which may be high dimensional, for example, a CNN layer in a computer vision application may contain three channels, each representing a red, green, and blue color respectively. CNN's are commonly used in object recognition methods, and are often used within constrained hardware. For brevity, 'CNN' may be referred to herein as 'NN', and is used herein interchangeably.

The method consists of a three stage process, where each stage varies whether configuration of a NN is performed on NN weights or NN activations. For both variations, it is assumed the NN is pre-trained.

The stages are described generically as follows:
First, a quantization of each layer of the NN is performed to produce a quantized neural network. The quantization is performed on the NN weights and/or activations by a computation which approximates the respective NN parameter, for example, by computing a minimal square error (MSE), and assigning a result to a lower precision representation of the respective NN parameter.

Next, a location process is executed in order to locate one or more layers of the NN which display a high reconstruction error following the quantization, for example, layers with a high MSE. For each located layer a modified quantization is computed, by assigning a dual INT4 representation, producing a modified quantized NN. Assigning a
a dual INT4 representation means that constrained hardware may be supported, as some low power devices prohibit mixed precision inference (such as using both INT4 and INT8 representations).

Finally, an adjustment of the scaling factors of the modified quantized NN is computed by using calibration datasets to minimize a distance between NN outputs and modified quantized neural network outputs.

As stated, for NN weight configuration, some stages vary from the generic description. The first stage is performed on each kernel, or optionally, on each group of kernels, of each layer of the NN separately. The reason is because a high output variance is observed in cumulative sub-kernels, which produces a low performance when kernels are quantized together, for example from FP32 to INT4.

Note, that quantizing kernel wise preserves linearity of a Hilbert space defined by a dot product operating on the NN weights tensor representation. In addition, the number of scaling factors increases linearly with the number of kernels, however in most NN's the number of kernels is low compared to an amount of NN parameters, and therefore computational overhead increases linearly.

The second stage for NN weight configuration is performed by a nested optimization performed on the located NN layers, which iteratively minimizes a distance metric between the NN weight tensor and an intermediately modified quantized neural network. The intermediately modified quantized neural network is updated each iteration by updating a respective computed scaling factor for each located layer.

For NN activations configuration, the configuration process searches for optimal scaling factors for approximation of full precision activations. The first stage quantization is computed for each layer, by minimizing a reconstruction error (MSE) between estimated between activations of the neural network on a respective layer and approximations of activations of the respective layer. Since using NN activations require NN inputs, the minimizing uses calibration datasets for the computations. The second stage for NN activations configuration, is performed by locating layers according to NN weights, as described for NN configuration by NN weights. The third stage for NN activations configuration is performed by computing an optimal scaling factor for each located layer using the calibration datasets, and assigning for each located layer a second scaling factor.

In addition, a more accurate configuration process is described for weights configuration when the NN located layers are approximated using one additional
quantization, and quantization is performed within a predefined precision range (such as INT4, which defines sixteen possible values). In this case the quantization may be computed by minimization of a quadratic term, which increases computational complexity but improves accuracy, in relation to the general case.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Each of the described systems includes and each of the described methods is implemented using a processing circuitry configured to execute a code. The processing circuitry may comprise hardware and firmware and/or software. For example, the processing circuitry may comprise one or more processors and a non-transitory medium connected to the one or more processors and carrying the code. The code, when executed by the one or more processors, causes the system to carry out the operations described herein.

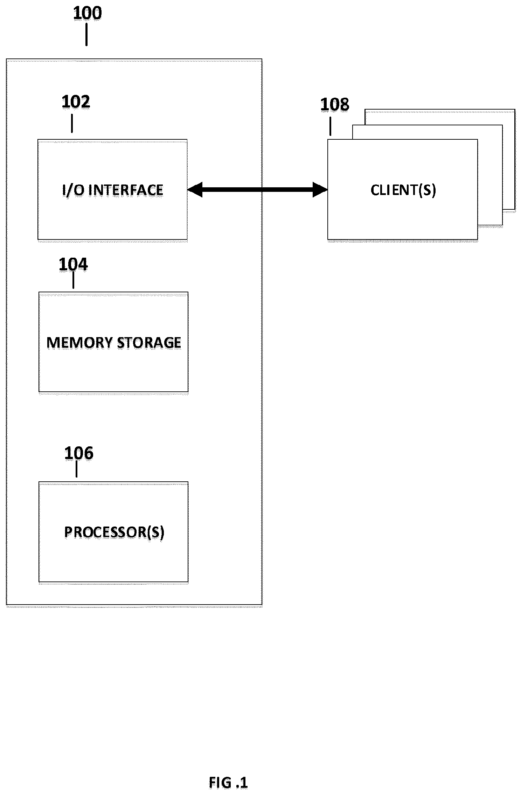

Reference is now made to FIG. 1, which is a depiction of system components in a NN configuration system 100, and related components, according to some embodiments of the present invention. The system 100 is used for configuring NN's according to NN weights and/or NN activations. For example, the system 100 may be installed in a computer for improving pre-trained NN's prior to installation of the NN's as firmware
within constrained hardware, specifically, installation within security cameras for a purpose of pattern recognition.

An I/O interface 102 receives NN parameters from a client(s) 108. NN parameters consist of information which suffices to simulate the NN within the system 100. The parameters consist of tensors of NN weights, and NN activation functions parameters (such as rectified linear unit (RelU) and/or sigmoid functions parameters). In addition the I/O interface receives an input which indicates a type of configuration requested by the client(s), which may consist of a NN weights configuration and/or a NN activations configuration request. According to the invention, clients(s) requests NN configuration for installment within constrained hardware. Specifically, a client factory installing pattern recognition firmware within security cameras uses the system 100.

The inputs received via the I/O interface are then processed by a code stored in the memory storage 104, by execution of the code by the one or more processor(s) 106. The code contains instructions for a process for configuring a NN, either based on NN weights or based on NN activations. Outcomes of NN configuration are outputted via the I/O interface 102 by the one or more processor(s) executing the code instructions, whereas the outputs are directed to back to the client(s).

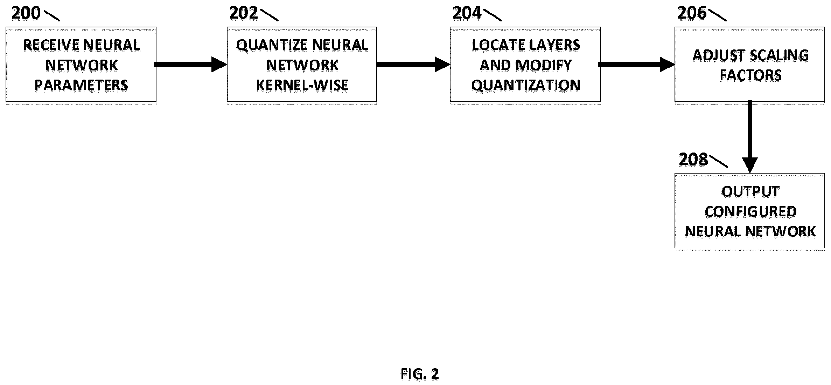

Reference is now made to FIG. 2, which is an exemplary dataflow of a process for configuring a NN by NN weights, according to some embodiments of the present invention.

Following a specification by the client(s) 108, to perform a NN configuration on the inputted NN according to NN weights, NN parameters are received by the process, as shown in 200. NN parameters consist of tensors of weights for each layer of the NN, and parameters related to the NN activation functions.

Next, as shown in 202, in a first configuration stage, a kernel-wise quantization is executed on the NN weight tensor T. The kernel-wise quantization is performed by altering a precision of each weight in T, according to predefined specifications, for example by altering precisions of weights from 32FP representations to INT4 representations. The purpose of performing kernel-wise quantization rather than uniform quantization per layer is to improve performance of configured NN's, since kernels may display large variance in values.

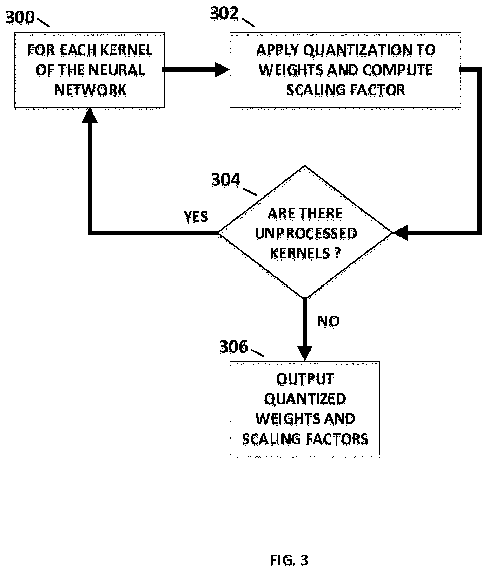

In addition, a scaling factor *αₖ* is computed for each kernel k of each layer in the NN. The scaling factor *αₖ* is computed by approximating *Tₖ ≈ αₖT̃ₖ,* wherein *Tₖ* is a respective sub-tensor k, as further detailed in FIG. 3.

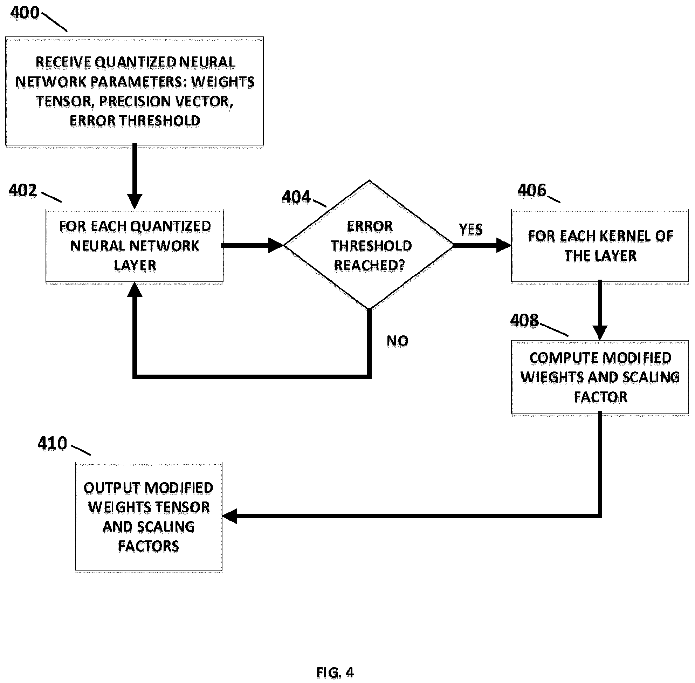

Next, as shown in 204, NN layers with an MSE higher than a predefined threshold are located, and quantization is modified for the located layers. Optionally, the modified quantization may be of identical precision to the kernel wise quantization performed in 202. This enables implementation of the method in constrained hardware which does not allow mixed precision representation. For each layer a modified scaling factor is computed, as further detailed in FIG. 4.

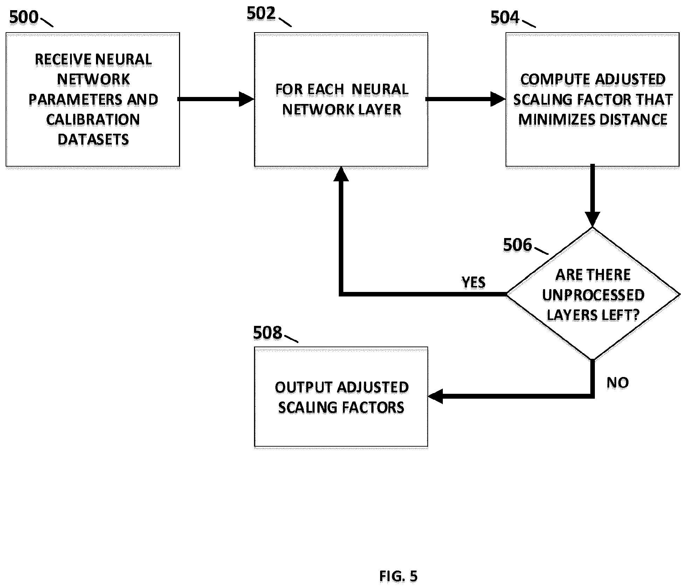

In a third configuration stage, as depicted in 206, scaling factors are adjusted using calibration datasets. This stage's purpose is to address rigidity of the NN which may arise following low precision quantization (such as INT4 quantization). The adjustment of scaling factors is performed by minimizing a distance metric between outputs of the neural network and the modified quantized neural network, using the calibration data sets, as further detailed in FIG. 5.

Next, as shown in 208, the configured NN parameters are outputted via the I/O interface to the client(s) 108.

Reference is now made to FIG. 3, which is an exemplary dataflow of a process of kernel wise quantization of a NN, according to some embodiments of the present invention. FIG. 3 details the NN weights quantization stage depicted in 202.

As shown in 300, 302, for each kernel of the NN the process applies a quantization for all NN weights of the respective kernel, and a respective scaling factor is computed. The quantization is applied according to a predefined precision range, for example, to INT8 or INT4 precision ranges, optionally according to hardware constraints employed by the client(s) 108.

The scaling factor for the respective kernel is computed by minimizing a reconstruction error on the respective kernel. Optionally, given a sub-tensor *Tⱼ* representation of a kernel *kⱼ* of size *nⱼ,* a scaling factor *αⱼ* for *kⱼ,* is computed by a minimization process which is applied to an MSE, wherein *MSE*( *kⱼ*) = ∥*Tⱼ - αⱼT̃ⱼ*∥²/*nⱼ*. Next, as shown in 304, 302 is repeated for all unprocessed kernels, and as shown in 306, upon completion of quantization and scaling factor computation for all kernels, the
quantized kernels and respective scaling factors are outputted to 204, which is the second stage of NN configuration by weights.

Reference is now made to FIG. 4, which is an exemplary dataflow of an iterative process of modifying quantization of NN layers with a high reconstruction error, according to some embodiments of the present invention. FIG. 4 details the NN layers modification stage depicted in 204.

As shown in 400, quantized NN parameters are received from the NN configuration process according to NN weights as detailed in FIG. 2. The received parameters include quantized NN weights tensors, a predefined error threshold, and optionally a precision vector *V* = [*I*₁ ... *I_{N}*]. The predefined error threshold is used for determining whether each layer's quantization(s) is modified by a using a higher precision or multiple quantization, and computing a respective modified scaling factor. The optional precision vector V defines for each NN layer *Lᵢ* a precision range. For example if *Iⱼ* = 16, then an INT4 precision may be applied to *Lⱼ.*

Next, as shown in 402 and 404, for each NN layer, the error threshold, denoted by *τ*, is compared to a reconstruction error between the quantized NN and an intermediately modified quantized NN. Optionally, the reconstruction error comprises an MSE, as detailed in 302, and if the MSE is larger than *τ*, the modification starting at 406 is applied to the respective layer.

Next, as shown in 406 and 408, for each kernel of the respective layer a modified quantization and scaling factor is computed. The modified quantization(s) is computed by Specifically, for implementation within hardware supporting only INT4 representation, weights of a modified layer are transformed from a FP32 representation to a dual INT4 representation, wherein each INT4 representation represents part of a quantization of a NN weight.

The modified scaling factor is computed by minimizing a distance metric computed between the quantized neural network as computed in 202, and the current intermediately modified quantized neural network, which may be described mathematically as follows. Denote by *d* the distance metric (i.e. MSE), by [1 ... *t*] a renumbering of indices of NN the layers located for modification. Denote by *αᵢ,* ${{W}_{ι}}^{˜}$, *i =* 1 *... t,* respective modified scaling
factors and respective quantied sub-tensors for layers *i*₁ ... *lₜ* of the NN. In addition denote by *I_{kᵢ} , i* = 1 ... *t* an allowed quantization range for layer *lᵢ*.

The iterative process of modifying NN layers quantization searches for: ${min}_{{α}_{1} , {{W}^{˜}}_{1} ∈ {I}_{{k}_{1}}} \left\{{min}_{{α}_{2} , {{W}^{˜}}_{2} ∈ {I}_{{k}_{2}}}\left\{… {min}_{{α}_{n} , {{W}^{˜}}_{n} ∈ {I}_{{k}_{n}}} d\left(W, {\sum }_{i = 1}^{n} {α}_{i} {{W}_{ι}}^{˜}\right)\right\}\right\}$

Next, as shown in 410, the modified quantized NN and the calculated scaling factors are outputted to the third NN weights quantization stage depicted in 206. Else, modification of the quantized NN is applied to a next layer, until all layers of the quantized NN are either modified or deemed as not needing modification due to a low reconstruction error.

For cases where a NN contains a layer that is quantized using dual quantization, and the quantization range is discrete (for example, INT4 or INT8 quantization), optimal first and second scaling factors may be efficiently computable. The computation may be executed using a grid search approach. Assuming scaling factors *α*₁*, α*₂ are given following the grid search, tensor elements are computed by minimizing a reconstruction error consisting of a quadratic term, Denote by ${{T}^{˜}}_{j}^{1}$*,* and ${{T}^{˜}}_{j}^{2}$ an element with index *j* of quantized weight tensors *T̃*¹*, T̃*²*,* and denote by ${ℤ}_{q}$ an allowed quantization range, then ${{T}^{˜}}_{j}^{1}$ and ${{T}^{˜}}_{j}^{2}$ are computable by the following term: $\begin{matrix}{min}_{{{T}^{˜}}_{j}^{1} , {{T}^{˜}}_{j}^{2}} {\left({T}_{j}-{α}_{1} {{T}^{˜}}_{j}^{1}-{α}_{2} {{T}^{˜}}_{j}^{2}\right)}^{2} ⇔ {min}_{{t}^{˜} ∈ {ℤ}_{q}} \left({min}_{{{T}^{˜}}_{j}^{2}}{\left({T}_{j}-{α}_{1} {t}^{˜}-{α}_{2} {{T}^{˜}}_{j}^{2}\right)}^{2}\right) \\ ⇔ {min}_{{t}^{˜} ∈ {ℤ}_{q}} {\left({T}_{j}-{α}_{1} {t}^{˜}-{α}_{2} {\left[\frac{{T}_{j} - {α}_{1} {t}^{˜}}{{α}_{2}}\right]}_{{ℤ}_{q}}\right)}^{2}\end{matrix}$

Reference is now made to FIG. 5, which is an exemplary dataflow of an iterative process of adjusting scaling factors of a NN, according to some embodiments of the present invention. The purpose of adjusting the scaling factors is to overcome any rigidity of the NN functionality which may arise following the first two stages of NN quantization, and layer quantization modification. FIG. 5 details the adjustment of scaling factors depicted in 206.

As shown in 500, modified quantized NN parameters are received following 204. In addition a small set of calibration datasets is received from the process depicted in FIG. 2. Next, as shown in 502 and 504, the calibration set is used to adjust the scaling factors layer-wise by minimizing the distance metric between outputs of the neural network and the modified quantized neural network, using the calibration data sets.

The minimization is performed as follows. Denote by *k* an optional desired precision (given by the client(s) 108) and by $f : {ℝ}^{N} \times {ℝ}^{d} \to {ℝ}^{m}$ a function representing the NN function mapping between the calibration datasets ${\left\{{X}_{i}\right\}}_{i = 1}^{s}$ in ${ℝ}^{N}$ and NN parameters *W* in ${ℝ}^{d}$ to a given mapping in ${ℝ}^{m}$, wherein ${\left.f\right|}_{l} : {ℝ}^{N} \times {ℝ}^{d} \to {ℝ}^{m}$ denotes an output of layer *l* of the NN.

The scaling factors readjustment is performed by finding a value for a parameter *γₗ* for layer *l* defined by ${\hat{W}}_{l} = {γ}_{l} \left({α}_{l}{{W}^{˜}}_{l}\right)$*,* wherein *αₗ* is a scaling factor generated in the first two configuration stages, and ${{W}_{l}}^{˜}$ is a weight tensor with precision *k* computed from a given mapping algorithm, which maps the outputs of the NN inputted to the system 100 to the outputs of the tensor ${{W}_{l}}^{˜}$*.* Next, *γₗ* is computed using a predefined metric d (for example, using *L*₁ or *L*₂ norm), and an optional discount factor 0 ≤ *βₗ* ≤ 1, for layer *l* (*βₗ* designates a client defined importance of layer *l*)*,* as follows: ${γ}_{l} = {min}_{γ} \left({\sum }_{l} {β}_{l} d \left(f\left(X, {W}_{l}\right),f\left(X,{\hat{W}}_{l}\left(γ\right)\right)\right)\right)$ Computing *γₗ* is computationally economical as few parameters are involved in the optimization.

Next, as shown in 504, the adjustment of scaling factors is repeated for all layers of the NN, until, as shown in 506, the adjusted scaling factors are outputted to 208 for processing.

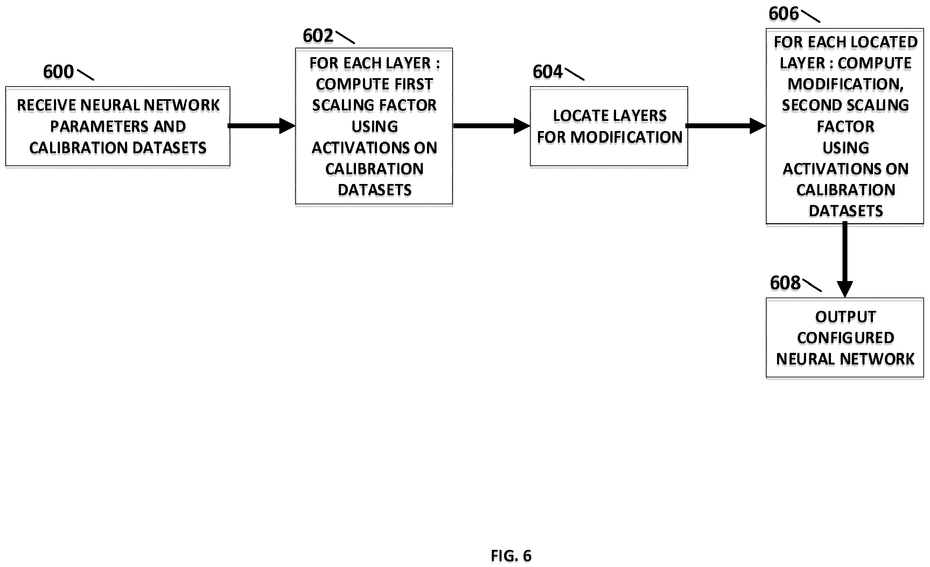

Reference is now made to FIG. 6, which is an exemplary dataflow of a process of configuring a NN by NN activations, according to some embodiments of the present invention. The purpose of configuring a NN by NN activations is to allow implementations of NN's within constrained hardware to be configured in real time, by pre-calculating configuration parameters. The process achieves this by using calibration datasets in advance in order to calculate configuration parameters for low precision representation of activations of the NN. Next, the calculated parameters may be programmed in firmware by a client(s), for example, by implementing a code within the firmware which performs a low cost arithmetic operation following any NN activation taking place during operations running on the hardware. For example, FP32 may be quantized to INT4 activations using scaling factors computed as described in FIG. 6. This may improve NN output accuracy, and may be implemented independently or before/after NN configuration by NN weights.

As shown in 600, NN parameters, comprising NN weight tensors, and NN activation function parameters are received from the client(s) 108 via the I/O interface. In addition, a set of calibration datasets is received, which are used for generating NN activations.

Next, as shown in 602, for each NN layer a first scaling factor is computed using the calibration datasets. Given a NN layer *l*, denote by *M* the size of the set of calibration datasets, by ${A}_{i}^{l}$ the activations of layer *l* on a dataset with index *i.* The first scaling factor *β*_{*l*,1} is computed by: ${β}_{l , 1} = {argmin}_{β} \left\{{\sum }_{i = 1}^{M} {\left‖{A}_{i}^{l}-β\left[\frac{{A}_{i}^{l}}{β}\right]\right‖}^{2}\right\}$

Note, that computing *β*_{*l,*1} is equivalent to solving an MSE problem.

Next, as shown in 604, NN layers are located for modification as described for the NN configuration by weights as depicted in 204. Next, as shown in 606, for each located layer a dual quantization representation is generated and a second scaling factor for the dual quantization of layer 1 is computed by: ${β}_{l , 2} = {argmin}_{β} \left\{{\sum }_{i = 1}^{M} {\left‖{A}_{i}^{l}-{β}_{l , 1}\left[\frac{{A}_{i}^{l}}{{β}_{l , 1}}\right]-β\left[\frac{{A}_{i}^{l} - {β}_{l , 1} \left[\frac{{A}_{i}^{l}}{{β}_{l , 1}}\right]}{β}\right]\right‖}^{2}\right\}$

Finally, as shown in 608, the first and second scaling factors are outputted to the client(s) 108 via the I/O interface.

Reference is now made to FIG. 7, which is a depiction of results of simulations of NN weight configuration, by using the first two configuration stages, according to some embodiments of the present invention. Simulations were performed using ImageNet validation data. Table 700 depicts prediction rate success of the top prediction scores of various NN's using full precision FP32 representations, and INT4, dual INT4 and INT8 quantization. As shown in 700, dual INT4 quantization using the method described herein produces results close to INT8 quantization, which demonstrates viability for implementation of the method for constrained hardware. Table 702 depicts prediction rate success of the top five prediction scores of various NN's. As seen in 702, for this accuracy analysis, dual INT4 quantization also demonstrates performance similar to INT8
quantization and significantly better than INT4 quantization performance. Table 704 depicts compression rates of the different NN's following quantization. As seen, dual INT4 quantization displays similar compression rates to INT8 for all the simulated NN's.

Reference is now made to FIG. 8, which is a depiction of results of simulations of NN weight configuration, by using all three configuration stages (depicted in the 'dual+optimization' column), according to some embodiments of the present invention. Simulations were performed using ImageNet data. Tables 800 and 802 depict prediction rate success of the top prediction scores and top five prediction scores respectively. As show in 800, 802, adding the scaling factor readjustment stage improves performance of all simulated NN's in both tables, to a level beyond that of INT8 quantization alone. Note, that NN activations in the simulations were used in full precision.

Both FIG. 7 and FIG. 8 demonstrate the usefulness of the method described, in applying dual INT4 quantization to various known NN's frameworks.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the independent claims. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant systems, methods and computer programs will be developed and the scope of the term neural network quantization is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity,
described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Citation or identification of any reference in this application shall not be construed as an admission that such reference is available as prior art to the present invention. To the extent that section headings are used, they should not be construed as necessarily limiting.

## Claims

1. A method of outputting, to at least one client factory installing pattern recognition firmware within security cameras, a configuration of a neural network, trained from a plurality of data samples, for implementation on constrained hardware, wherein the implementation on the constrained hardware is an installation on the security cameras for a purpose of the pattern recognition, the method comprising:
receiving neural network parameters from the client factory installing pattern recognition firmware, wherein the neural network parameters consist of tensors of neural network weights, and neural network activation functions parameters;
receiving, from the client factory installing pattern recognition firmware, an input which indicates a request for the configuration of the neural network for the implementation on the constrained hardware;
quantizing (202, 302, 402) each layer of the neural network to produce a quantized neural network with a plurality of respective scaling factors;
locating (204) one or more layers of the quantized neural network;
computing (204, 408) a modified quantization for the one or more located layers to produce a modified quantized neural network; and
adjusting (206) the plurality of scaling factors of the modified quantized neural network by computing a similarity between a plurality of neural network outputs and a plurality of modified quantized neural network outputs;
wherein the configuration is performed on a plurality of weights of the tensors of the neural network weights, by:
quantizing each layer of the neural network by quantizing each kernel of the plurality of kernels of each layer of the neural network to produce a quantized neural network with a plurality of respective scaling factors;
wherein locating one or more layers of the quantized neural network further comprises:
comparing a reconstruction error computed between the quantized neural network and the neural network to a predefined error threshold;
wherein locating (204) one or more layers of the quantized neural network comprises:
locating (204) one or more layers of the quantized neural network which display a high reconstruction error following the quantization; and
wherein computing (204, 408) a modified quantization for the one or more located layers to produce a modified quantized neural network comprises:
assigning a dual 4 bit, INT4, representation, wherein the constrained hardware is capable of only INT4 representations;
wherein the method further comprises:
outputting, to the client factory installing pattern recognition firmware, outcomes of the configuration of the neural network.

2. The method of claim 1, wherein the neural network is a convolutional neural network.

3. The method of claim 1 or 2, wherein applying the quantization of the plurality of kernels is performed uniformly for groups of kernels of the plurality of kernels.

4. A system for outputting, to at least one client factory installing pattern recognition firmware within security cameras, a configuration of a neural network, trained from a plurality of data samples, for implementation on constrained hardware, wherein the implementation on the constrained hardware is an installation on the security cameras for a purpose of the pattern recognition, the system comprising:
an I/O interface configured to:
receive neural network parameters from the at least one client factory installing pattern recognition firmware, wherein the neural network parameters consist of tensors of neural network weights, and neural network activation functions parameters;
receive, from the at least one client factory installing pattern recognition firmware, an input which indicates a request for the configuration of the neural network for the implementation on the constrained hardware;
and processing circuitry, configured to:
quantize each layer of the neural network to produce a quantized neural network with a plurality of respective scaling factors;
locate one or more layers of the quantized neural network;
compute, a modified quantization for the one or more located layers to produce a modified quantized neural network; and
adjust the plurality of scaling factors of the modified quantized neural network by computing a similarity between a plurality of neural network outputs and a plurality of modified quantized neural network outputs;
wherein the configuration is performed on a plurality of weights of the of the tensors neural network weights, by:
quantizing each layer of the neural network by quantizing each kernel of the plurality of kernels of each layer of the neural network to produce a quantized neural network with a plurality of respective scaling factors;
wherein locating one or more layers of the quantized neural network further comprises:
comparing a reconstruction error computed between the quantized neural network and the neural network to a predefined error threshold;
wherein the processing circuitry is configured to locate one or more layers of the quantized neural network by:
locating one or more layers of the quantized neural network which display a high reconstruction error following the quantization; and
wherein the processing circuitry is configured to compute a modified quantization for the one or more located layers to produce a modified quantized neural network by:
assigning a dual 4 bit, INT4, representation, wherein the constrained hardware is capable of only INT4 representations;
wherein the I/O interface is further configured to:
output, to the at least one client factory installing pattern recognition firmware, outcomes of the configuration of the neural network.

5. A non-transitory computer-readable storage medium comprising a program code which, when executed by a computer, causes the computer to execute the method of claim 1.

## Patentansprüche

1. Verfahren zum Ausgeben, an mindestens eine Client-Fabrik, die Mustererkennungsfirmware in Sicherheitskameras installiert, einer Konfiguration eines anhand mehrerer Datensamples trainierten neuronalen Netzes zur Implementierung auf eingeschränkter Hardware, wobei die Implementierung auf der eingeschränkten Hardware eine Installation auf den Sicherheitskameras für einen Zweck der Mustererkennung ist, wobei das Verfahren Folgendes umfasst:
Empfangen von Neuronalnetzparametern von der Client-Fabrik, die Mustererkennungsfirmware installiert, wobei die Neuronalnetzparameter aus Tensoren von Neuronalnetzgewichten und Neuronalnetzaktivierungsfunktionsparametern bestehen;
Empfangen, von der Client-Fabrik, die Mustererkennungsfirmware installiert, einer Eingabe, die eine Anforderung für die Konfiguration des neuronalen Netzes für die Implementierung auf der eingeschränkten Hardware angibt;
Quantisieren (202, 302, 402) jeder Schicht des neuronalen Netzes, um ein quantisiertes neuronales Netz mit mehreren jeweiligen Skalierungsfaktoren zu erzeugen;
Lokalisieren (204) einer oder mehrerer Schichten des quantisierten neuronalen Netzes;
Berechnen (204, 408) einer modifizierten Quantisierung für die eine oder die mehreren lokalisierten Schichten, um ein modifiziertes quantisiertes neuronales Netz zu erzeugen; und
Anpassen (206) der mehreren Skalierungsfaktoren des modifizierten quantisierten neuronalen Netzes durch Berechnen einer Ähnlichkeit zwischen mehreren Neuronalnetzausgaben und mehreren modifizierten quantisierten Neuronalnetzausgaben;
wobei die Konfiguration an mehreren Gewichten der Tensoren der Neuronalnetzgewichte durchgeführt wird durch:
Quantisieren jeder Schicht des neuronalen Netzes durch Quantisieren jedes Kerns der mehreren Kerne jeder Schicht des neuronalen Netzes, um ein quantisiertes neuronales Netz mit mehreren jeweiligen Skalierungsfaktoren zu erzeugen;
wobei das Lokalisieren einer oder mehrerer Schichten des quantisierten neuronalen Netzes ferner Folgendes umfasst:
Vergleichen eines zwischen dem quantisierten neuronalen Netz und dem neuronalen Netz berechneten Rekonstruktionsfehlers mit einer vordefinierten Fehlerschwelle;
wobei das Lokalisieren (204) einer oder mehrerer Schichten des quantisierten neuronalen Netzes Folgendes umfasst:
Lokalisieren (204) einer oder mehrerer Schichten des quantisierten neuronalen Netzes, die nach der Quantisierung einen hohen Rekonstruktionsfehler zeigen; und
wobei das Berechnen (204, 408) einer modifizierten Quantisierung für die eine oder die mehreren lokalisierten Schichten, um ein modifiziertes quantisiertes neuronales Netz zu erzeugen, Folgendes umfasst:
Zuweisen einer Doppel-4-Bit- bzw. Doppel-INT4-Repräsentation, wobei die eingeschränkte Hardware nur zu INT4-Repräsentationen fähig ist;
wobei das Verfahren ferner Folgendes umfasst:
Ausgeben, an die Client-Fabrik, die Mustererkennungsfirmware installiert, von Ergebnissen der Konfiguration des neuronalen Netzes.

2. Verfahren nach Anspruch 1, wobei das neuronale Netz ein neuronales Faltungsnetz ist.

3. Verfahren nach Anspruch 1 oder 2, wobei das Anwenden der Quantisierung der mehreren Kerne einheitlich für Gruppen von Kernen der mehreren Kerne durchgeführt wird.

4. System zum Ausgeben, an mindestens eine Client-Fabrik, die Mustererkennungsfirmware in Sicherheitskameras installiert, einer Konfiguration eines anhand mehrerer Datensamples trainierten neuronalen Netzes zur Implementierung auf eingeschränkter Hardware, wobei die Implementierung auf der eingeschränkten Hardware eine Installation auf den Sicherheitskameras für einen Zweck der Mustererkennung ist, wobei das System Folgendes umfasst:
eine E/A-Schnittstelle, die zu Folgendem ausgelegt ist:
Empfangen von Neuronalnetzparametern von der mindestens einen Client-Fabrik, die Mustererkennungsfirmware installiert, wobei die Neuronalnetzparameter aus Tensoren von Neuronalnetzgewichten und Neuronalnetzaktivierungsfunktionsparametern bestehen;
Empfangen, von der mindestens einen Client-Fabrik, die Mustererkennungsfirmware installiert, einer Eingabe, die eine Anforderung für die Konfiguration des neuronalen Netzes für die Implementierung auf der eingeschränkten Hardware angibt;
und eine Verarbeitungsschaltungsanordnung, die zu Folgendem ausgelegt ist:
Quantisieren jeder Schicht des neuronalen Netzes, um ein quantisiertes neuronales Netz mit
mehreren jeweiligen Skalierungsfaktoren zu erzeugen;
Lokalisieren einer oder mehrerer Schichten des quantisierten neuronalen Netzes;
Berechnen einer modifizierten Quantisierung für die eine oder die mehreren lokalisierten Schichten, um ein modifiziertes quantisiertes neuronales Netz zu erzeugen; und
Anpassen der mehreren Skalierungsfaktoren des modifizierten quantisierten neuronalen Netzes durch Berechnen einer Ähnlichkeit zwischen mehreren Neuronalnetzausgaben und mehreren modifizierten quantisierten Neuronalnetzausgaben;
wobei die Konfiguration an mehreren Gewichten der der Tensoren Neuronalnetzgewichte durchgeführt wird durch:
Quantisieren jeder Schicht des neuronalen Netzes durch Quantisieren jedes Kerns der mehreren Kerne jeder Schicht des neuronalen Netzes, um ein quantisiertes neuronales Netz mit mehreren jeweiligen Skalierungsfaktoren zu erzeugen;
wobei das Lokalisieren einer oder mehrerer Schichten des quantisierten neuronalen Netzes ferner Folgendes umfasst:
Vergleichen eines zwischen dem quantisierten neuronalen Netz und dem neuronalen Netz berechneten Rekonstruktionsfehlers mit einer vordefinierten Fehlerschwelle;
wobei die Verarbeitungsschaltungsanordnung ausgelegt ist zum Lokalisieren einer oder mehrerer Schichten des quantisierten neuronalen Netzes durch:
Lokalisieren einer oder mehrerer Schichten des quantisierten neuronalen Netzes, die nach der Quantisierung einen hohen Rekonstruktionsfehler zeigen; und
wobei die Verarbeitungsschaltungsanordnung ausgelegt ist zum Berechnen einer modifizierten Quantisierung für die eine oder die mehreren lokalisierten Schichten, um ein modifiziertes quantisiertes neuronales Netz zu erzeugen, durch:
Zuweisen einer Doppel-4-Bit- bzw. Doppel-INT4-Repräsentation, wobei die eingeschränkte Hardware nur zu INT4-Repräsentationen fähig ist;
wobei die E/A-Schnittstelle ferner zu Folgendem ausgelegt ist:
Ausgeben, an die mindestens eine Client-Fabrik, die Mustererkennungsfirmware installiert, von Ergebnissen der Konfiguration des neuronalen Netzes.

5. Nicht-flüchtiges computerlesbares Speichermedium, das einen Programmcode umfasst, der bei Ausführung durch einen Computer bewirkt, dass der Computer das Verfahren nach Anspruch 1 ausführt.

## Revendications

1. Procédé d'envoi en sortie, à au moins un micrologiciel de reconnaissance de formes d'installation d'usine client à l'intérieur de caméras de sécurité, d'une configuration d'un réseau neuronal, entraîné à partir d'une pluralité d'échantillons de données, pour une mise en œuvre sur un matériel contraint, dans lequel la mise en œuvre sur le matériel contraint est une installation sur les caméras de sécurité dans un but de la reconnaissance de formes, le procédé comprenant :
la réception de paramètres de réseau neuronal en provenance du micrologiciel de reconnaissance de formes d'installation d'usine client, dans lequel les paramètres de réseau neuronal sont constitués de tenseurs de poids de réseau neuronal, et de paramètres de fonctions d'activation de réseau neuronal ;
la réception, en provenance du micrologiciel de reconnaissance de formes d'installation d'usine client, d'une entrée qui indique une demande concernant la configuration du réseau neuronal pour la mise en œuvre sur le matériel contraint ;
la quantification (202, 302, 402) de chaque couche du réseau neuronal pour produire un réseau neuronal quantifié avec une pluralité de facteurs de mise à échelle respectifs ;
la localisation (204) d'une ou de plusieurs couches du réseau neuronal quantifié ;
le calcul (204, 408) d'une quantification modifiée pour l'une ou les plusieurs couches localisées pour produire un réseau neuronal quantifié modifié ; et
l'ajustement (206) de la pluralité de facteurs de mise à échelle du réseau neuronal quantifié modifié en calculant une similarité entre une pluralité de sorties de réseau neuronal et une pluralité de sorties de réseau neuronal quantifié modifié ;
dans lequel la configuration est réalisée sur une pluralité de poids des tenseurs des poids de réseau neuronal, par le biais de :
la quantification de chaque couche du réseau neuronal en quantifiant chaque noyau de la pluralité de noyaux de chaque couche du réseau neuronal pour produire un réseau neuronal quantifié avec une pluralité de facteurs de mise à échelle respectifs ;
dans lequel la localisation d'une ou de plusieurs couches du réseau neuronal quantifié comprend en outre :
la comparaison d'une erreur de reconstruction calculée entre le réseau neuronal quantifié et le réseau neuronal à un seuil d'erreur prédéfini ;
dans lequel la localisation (204) d'une ou de plusieurs couches du réseau neuronal quantifié comprend :
la localisation (204) d'une ou de plusieurs couches du réseau neuronal quantifié qui présentent une haute erreur de reconstruction suivant la quantification ; et
dans lequel le calcul (204, 408) d'une quantification modifiée pour l'une ou les plusieurs couches localisées pour produire un réseau neuronal quantifié modifié comprend :
l'attribution d'une représentation à 4 bits, INT4, double, dans lequel le matériel contraint est capable seulement de représentations INT4 ;
dans lequel le procédé comprend en outre :
l'envoi en sortie, au micrologiciel de reconnaissance de formes d'installation d'usine client, de résultats de la configuration du réseau neuronal.

2. Procédé de la revendication 1, dans lequel le réseau neuronal est un réseau neuronal convolutif.

3. Procédé de la revendication 1 ou 2, dans lequel l'application de la quantification de la pluralité de noyaux est réalisée uniformément pour des groupes de noyaux de la pluralité de noyaux.

4. Système pour envoyer en sortie, à au moins un micrologiciel de reconnaissance de formes d'installation d'usine client à l'intérieur de caméras de sécurité, une configuration d'un réseau neuronal, entraîné à partir d'une pluralité d'échantillons de données, pour une mise en œuvre sur un matériel contraint, dans lequel la mise en œuvre sur le matériel contraint est une installation sur les caméras de sécurité dans un but de la reconnaissance de formes, le système comprenant :
une interface I/O configurée pour :
recevoir des paramètres de réseau neuronal en provenance d'au moins un micrologiciel de reconnaissance de formes d'installation d'usine client, dans lequel les paramètres de réseau neuronal sont constitués de tenseurs de poids de réseau neuronal, et de paramètres de fonctions d'activation de réseau neuronal ;
recevoir, en provenance de l'au moins un micrologiciel de reconnaissance de formes d'installation d'usine client, une entrée qui indique une demande concernant la configuration du réseau neuronal pour la mise en œuvre sur le matériel contraint ;
et une circuiterie de traitement, configurée pour :
quantifier chaque couche du réseau neuronal pour produire un réseau neuronal quantifié avec une pluralité de facteurs de mise à échelle respectifs ;
localiser une ou plusieurs couches du réseau neuronal quantifié ;
calculer une quantification modifiée pour l'une ou les plusieurs couches localisées pour produire un réseau neuronal quantifié modifié ; et
ajuster la pluralité de facteurs de mise à échelle du réseau neuronal quantifié modifié en calculant une similarité entre une pluralité de sorties de réseau neuronal et une pluralité de sorties de réseau neuronal quantifié modifié ;
dans lequel la configuration est réalisée sur une pluralité de poids des des tenseurs poids de réseau neuronal, en :
quantifiant chaque couche du réseau neuronal en quantifiant chaque noyau de la pluralité de noyaux de chaque couche du réseau neuronal pour produire un réseau neuronal quantifié avec une pluralité de facteurs de mise à échelle respectifs ;
dans lequel la localisation d'une ou de plusieurs couches du réseau neuronal quantifié comprend en outre :
la comparaison d'une erreur de reconstruction calculée entre le réseau neuronal quantifié et le réseau neuronal à un seuil d'erreur prédéfini ;
dans lequel la circuiterie de traitement est configurée pour localiser une ou plusieurs couches du réseau neuronal quantifié en :
localisant une ou plusieurs couches du réseau neuronal quantifié qui présentent une haute erreur de reconstruction suivant la quantification ; et
dans lequel la circuiterie de traitement est configurée pour calculer une quantification modifiée pour l'une ou les plusieurs couches localisées pour produire un réseau neuronal quantifié modifié en :
attribuant une représentation à 4 bits, INT4, double, dans lequel le matériel contraint est capable seulement de représentations INT4 ;
dans lequel l'interface I/O est en outre configurée pour :
envoyer en sortie, à l'au moins un micrologiciel de reconnaissance de formes d'installation d'usine client, des résultats de la configuration du réseau neuronal.

5. Support de stockage non transitoire lisible par ordinateur comprenant un code de programme qui, lorsqu'il est exécuté par un ordinateur, amène l'ordinateur à exécuter le procédé de la revendication 1.
